Europäisches Patentamt

European Patent Office

Office européen des brevets

(11) Veröffentlichungsnummer: **0 319 970**
**A2**

## EUROPÄISCHE PATENTANMELDUNG

(21) Anmeldenummer: 88120494.5

(22) Anmeldetag: 08.12.88

(51) Int. Cl.4: **B60T 13/66**

(30) Priorität: 08.12.87 DE 3741442
09.09.88 DE 3830642

(43) Veröffentlichungstag der Anmeldung:
14.06.89 Patentblatt 89/24

(84) Benannte Vertragsstaaten:
AT BE CH DE ES FR GB IT LI LU NL SE

(71) Anmelder: Paukner, Rudolf
Brückenstrasse 46a
D-8441 Salching(DE)

(72) Erfinder: Paukner, Rudolf
Brückenstrasse 46a
D-8441 Salching(DE)

(74) Vertreter: Gustorf, Gerhard, Dipl.-Ing.
Patentanwalt Dipl.-Ing. Gerhard Gustorf
Bachstrasse 6 A
D-8300 Landshut(DE)

(54) **Bremsvorrichtung für Anhänger.**

(57) Bei Anhängern besteht die große Gefahr, daß diese beim Bremsen des Zugfahrzeugs ins Schleudern kommen und dann nur noch sehr schwierig abzufangen sind. Bekannte Auflaufbremseinrichtungen können hier nur in sehr begrenztem Maß Abhilfe schaffen.

Diesem Nachteil wird durch die Erfindung dadurch abgeholfen, daß das Gespann Zugfahrzeug (10) - Anhänger (14) entweder beim Betätigen der Fußbremseinrichtung oder durch einen Handschalter (22) auseinandergezogen wird. Hierzu ist von dem elektrischen Stromkreis des Zugfahrzeugs (10), in den die Bremsrückleuchten (24) geschaltet sind, eine Steuerleitung (62) abgezweigt, die von dem Bremslichtschalter (20) des Fußbremshebels (18) und/oder dem Handschalter (22) mit Strom versorgt werden kann, um dann über ein Betätigungsglied, z.B. ein Elektromagnetventil eines pneumatischen Arbeitszylinders (52) die Radbremsen des Anhängers (14) einzurücken.

Die Bremsvorrichtung eignet sich zum Einbau in Pkw, Lkw und Landmaschinen.

Fig. 2

# Bremsvorrichtung für Anhänger

Die Erfindung betrifft eine Vorrichtung zum Abbremsen eines Radbremsen aufweisenden Anhängers, der über eine Deichsel an einem Zugfahrzeug angehängt ist, das eine auf seine Räder wirkende Fußbremseinrichtung, eine Feststellbremseinrichtung sowie einen elektrischen Stromkreis hat.

Es ist bekannt, daß Anhänger, insbesondere von Personenkraftfahrzeugen gezogene, auflaufgebremste Anhänger in schwierigen Situationen, insbesondere beim Schleudern sehr schwierig abzufangen sind. Meistens reagiert der Fahrer falsch, so daß Verkehrsgefährdungen oder sogar Unfälle die Folge sind.

Der Erfindung liegt die Aufgabe zugrunde, hier Abhilfe zu schaffen und eine Bremsvorrichtung für Anhänger zur Verfügung zu stellen, über welche der Fahrer in der Lage ist, das Gespann Zugfahrzeug-Anhänger dadurch "auseinanderzuziehen", daß die Radbremsen des Anhängers früher zum Ansprechen gebracht werden können als die Radbremsen des Zugfahrzeugs.

Gemäß der Erfindung wird diese Aufgabe dadurch gelöst, daß von dem elektrischen Stromkreis des Zugfahrzeugs eine von mindestens einem Schalter betätigbare Steuerleitung abgezweigt ist, die bei geschlossenem Schalter ein Betätigungsglied zum Einrücken der Radbremse des Anhängers aktiviert.

Der Schalter kann dabei ein Bremslichtschalter der Fußbremsschaltung und/oder ein manuell betätigbarer Schalter sein.

Durch die Erfindung wird der Vorteil erreicht, daß aufgrund der unterschiedlichen Ansprechzeitpunkte der Bremsen des Zugfahrzeugs und der Bremsen des Anhängers eine Bremsvoreilung des Anhängers erreicht werden kann. Wenn der Schalter der Bremslichtschalter der Bremseinrichtung ist, genügt ein leichtes Antippen des Fußbremshebels, um den Anhänger abzubremsen, bevor das Zugfahrzeug gebremst wird. Durch intervallartiges Betätigen des Fußbremshebels kann dadurch der Anhänger bei beginnenden Schleuderbewegungen rasch wieder in die Spur des Zugfahrzeugs gebracht werden.

Wenn der Schalter ein manuell betätigbarer Schalter ist, hat der Fahrer die Möglichkeit, beispielsweise bei Talfahrten den Anhänger abzubremsen, ohne gleichzeitig auch das Zugfahrzeug abzubremsen, was sich äußerst vorteilhaft auf die Richtungsstabilität des Gespanns auswirkt. Ein weiterer Vorzug besteht darin, daß bei längeren Talfahrten die Bremsen des Zugfahrzeugs entlastet werden.

Nach einem weiteren Merkmal der Erfindung ist der elektrische Stromkreis über die Bremsrückleuchten des Zugfahrzeugs geführt. Dadurch wird sichergestellt, daß bei jedem Bremsvorgang, unabhängig ob durch Betätigen der Fußbremseinrichtung oder der zusätzlichen Bremsvorrichtung gemäß der Erfindung, die Bremsrückleuchten aufleuchten.

Das Betätigungsglied kann ein Druckfreigabeglied sein, das in eine Druckleitung zwischen einen Druckerzeuger und einen Arbeitszylinder geschaltet ist, dessen Kolbenstange mit einem Koppelelement verbunden ist, das seinerseits mit einem Einrückorgan für die Radbremsen verbunden ist.

Wenn das freie Ende der Koppelstange einen quer zu ihrer Längsachse verstellbaren Hebelarm trägt, an dessem freien Ende das Zugseil befestigt ist, besteht die Möglichkeit, die auf das Zugseil wirkende Kraft entsprechend der Anhängerlast einzustellen.

Eine besonders günstige Weiterbildung der Erfindung besteht darin, daß das Koppelelement Teil einer Auflaufbremseinrichtung ist. Hierbei kann der Arbeitszylinder ohne größere Änderungen in herkömmliche Auflaufbremseinrichtungen eingebaut werden.

Weitere Merkmale und Vorteile der Erfindung ergeben sich aus den Patentansprüchen und aus der folgenden Beschreibung von Ausführungsbeispielen, die in der Zeichnung dargestellt sind.

Es zeigen:

Figur 1 eine schematische Draufsicht eines Gespanns Zugfahrzeug-Anhänger mit eingebauter Bremsvorrichtung gemäß der Erfindung,

Figur 2 ein Blockschaltbild einer ersten Ausführungsform der Erfindung,

Figur 3 eine Variante der Figur 2,

Figur 4 den im Zugfahrzeug vorgesehenen Teil einer Schaltung mit zwei Schaltern zur Betätigung des in Figur 5 dargestellten Systems gemäß einer weiteren Variante der Erfindung,

Figur 5 das über die Schaltung gemäß Figur 4 gesteuerte, hydraulische System,

Figur 6 ein Beispiel für die Anbringung der Bremsvorrichtung am Anhänger,

Figur 7 eine Seitenansicht der Einzelheit VII der Figur 6 in vergrößertem Maßstab,

Figur 8 ein Schaltbild einer weiteren Ausführungsform,

Figur 9 eine der Figur 6 entsprechende Darstellung einer erweiterten Ausführungsform,

Figur 10 eine vergrößerte Ausschnittsdarstellung der Figur 9 und

Figur 11 einen schematischen Längsschnitt durch eine Auflaufbremseinrichtung mit integrierter Bremsvorrichtung gemäß der Erfindung.

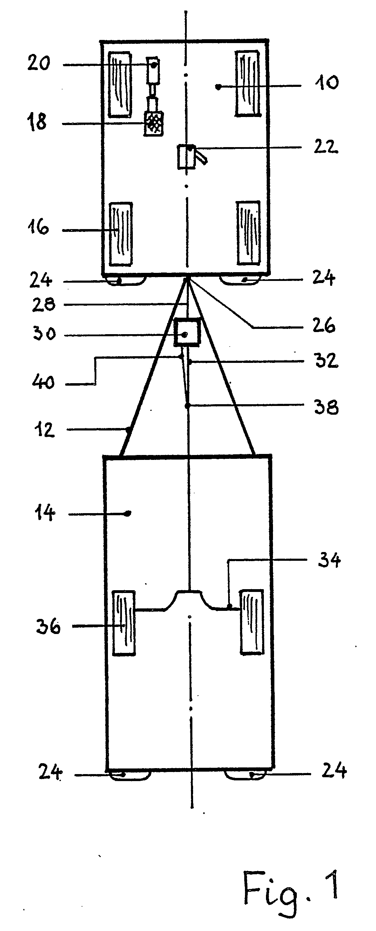

Figur 1 zeigt in Draufsicht ein Zugfahrzeug 10, das über eine Deichsel 12 einen Anhänger 14 zieht. Das Zugfahrzeug 10 hat eine auf seine Räder 16 wirkende Fußbremseinrichtung mit einem Fußbremshebel 18 und einem von diesem betätigten Bremslichtschalter 20. Zusätzlich ist das Zugfahrzeug 10 mit einem manuell betätigbaren Schalter 22 ausgerüstet, der Teil der Erfindung ist und nachstehend näher erläutert wird.

Der Bremslichtschalter 20 ist in bekannter und daher nicht näher dargestellter Weise über einen elektrischen Stromkreis mit herkömmlichen Bremsrückleuchten 24 am Zugfahrzeug 10 und entsprechenden Bremsrückleuchten 24 am Anhänger 14 verbunden.

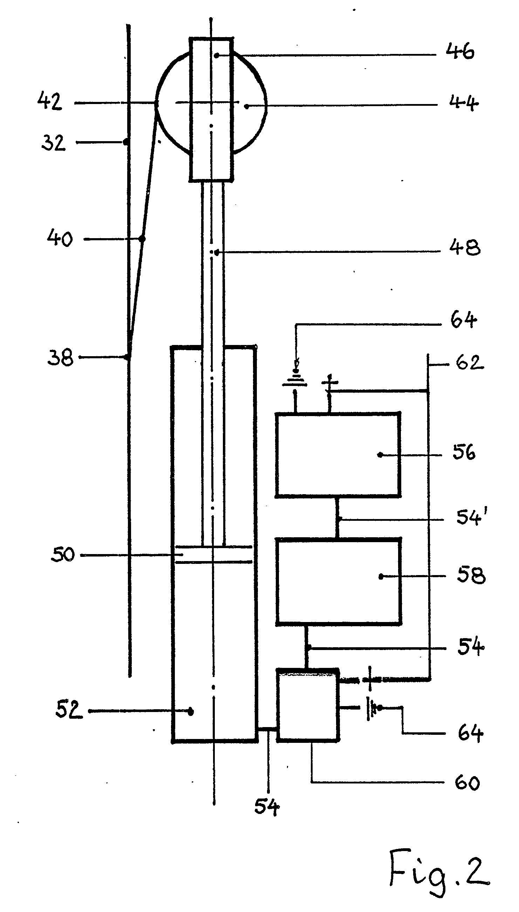

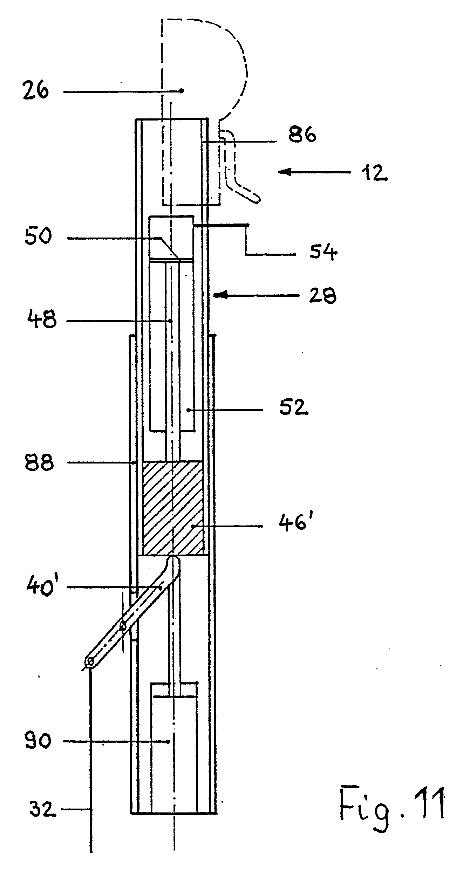

Die Deichsel 12 ist mit dem Zugfahrzeug 10 über eine Anhängekupplung 26 verbunden, die eine Auflaufbremseinrichtung 28 hat, von der eine Ausbildungsmöglichkeit in Figur 11 gezeigt ist, auf die weiter unten noch näher eingegangen wird. Im Bereich der Deichsel 12 ist mit Hilfe von Schrauben oder Rohrschellen ein Gehäuse 30 befestigt, das die in Figur 2 schematisch dargestellten Teile der Zusatzbremsvorrichtung gemäß der Erfindung enthält.

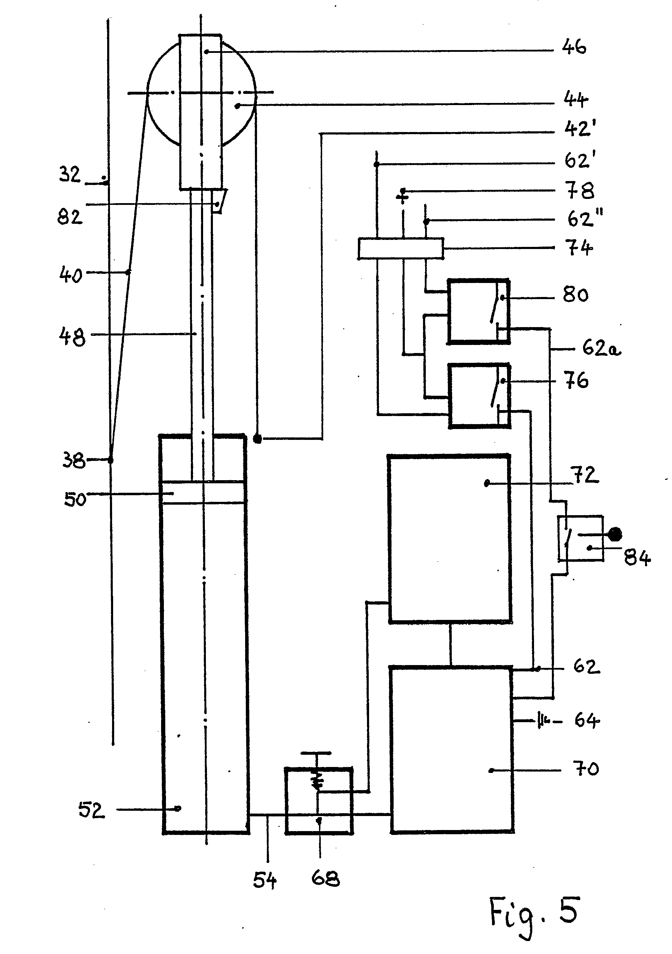

Figur 2 zeigt in vergrößertem Maßstab schematisch ein Koppelelement 32, beispielsweise ein Anhängerbremsseil oder eine Zugstange der in Figur 11 dargestellten Auflaufbremseinrichtung 28. Dieses Koppelelement 32 dient in bekannter Weise zum Betätigen von Einrückorganen 34 für die Radbremsen der Räder 36 des Anhängers 14. An einem Punkt 38 des Koppelelements 32 ist ein Zugseil 40 befestigt, das seinerseits in einem Punkt 42 an einer Umlenkrolle 44 angreift oder gemäß der Variante der Figur 5 über diese läuft und an einem gehäusefesten Punkt 42′ aufgehängt ist.

Die Umlenkrolle 44 ist in einem Gabelkopf 46 frei drehbar gelagert, der am freien Ende einer Kolbenstange 48 eines Kolbens 50 befestigt ist. Der Kolben 50 ist in einem pneumatischen Arbeitszylinder 52 verschiebbar gelagert, in dessen Arbeitskammer eine pneumatische Druckleitung 54 mündet.

Wie Figur 2 weiter zeigt, dient zur Betätigung des Kolbens 50 ein Kompressor 56, der über den Leitungsabschnitt 54′ mit einem Druckbehälter 58 verbunden ist, der ein bekanntes und nicht näher gezeigtes Rückschlagventil aufweist. Von dem Druckbehälter 58 führt die Druckleitung 54 zu einem Elektromagnetventil 60, das über die o.a. Leitung 54 mit dem Arbeitsraum des Arbeitszylinders 52 verbunden ist.

Gemäß der Erfindung führt von dem elektrischen Stromkreis, in den die Bremsrückleuchten 24 geschaltet sind, eine Steuerleitung 62 zu dem Gehäuse 30 der erfindungsgemäßen Bremsvorrichtung, wo sie gemäß Figur 2 an den Kompressor 56 und das Elektromagnetventil 60 angeschlossen ist. Die Masseanschlüsse des Kompressors 56 und des Elektromagnetventils 60 sind mit 64 bezeichnet.

Sobald der Fahrer des Zugfahrzeugs 10 den Fußbremshebel 16 antippt, wird über den Bremslichtschalter 20 Strom zu den Bremsrückleuchten 24 freigegeben. Von diesem Stromkreis fließt dann auch Strom über die Steuerleitung 62 zu dem Elektromagnetventil 60, das den Durchfluß, von Druckluft vom Druckbehälter 58 in den Arbeitszylinder 52 freigibt. Dadurch wird der Kolben 50 ausgeschoben und zieht über die Umlenkrolle 44 das mit dem Zugseil 40 verbundene Koppelelement 32 an, welches seinerseits das Einrückorgan 34 der Radbremsen des Anhängers 14 betätigt. Auf diese Weise wird der Anhänger 14 wirkungsvoll abgebremst.

Das Bremssystem des Anhängers 14 kann unabhängig von einer Betätigung des Fußbremshebels 18 auch durch den z.B. über die Feststellbremse 110 manuell zu betätigenden Schalter 22 angesteuert werden, um das Gespann Zugfahrzeug 10 - Anhänger 14 auseinanderzuziehen, ohne daß das Zugfahrzeug 10 abgebremst wird. Da der Schalter 22 mit dem elektrischen Stromkreis verbunden ist, in den die Bremsrückleuchten 24 geschaltet sind, leuchten diese auch bei diesem Vorgang auf.

Hierbei werden zwei weitere Vorteile der Erfindung deutlich. Mit der Vorrichtung steht eine Anfahrhilfe am Berg zur Verfügung, denn es genügt, wenn der Fahrer den Hebel der Feststellbremse 110 etwas anzieht, ohne die Bremsen des Zugfahrzeugs 10 zu betätigen; dabei werden jedoch die Bremsen des Anhängers 14 eingerückt, so daß das Gespann ohne Rückrollen fortgefahren werden kann. Entsprechendes gilt für ein Rückwärtsfahren talwärts. Hierbei sprechen bei herkömmlichen Anhängern die Auflaufbremseinrichtungen nicht an, so daß es sehr schwierig ist, das Gespann nur mit den Bremsen des Zugfahrzeugs abzubremsen. Wenn in dieser Situation der Fahrer ebenfalls den Hebel der Feststellbremse 110 betätigt, kann auch der Anhänger 14 abgebremst werden.

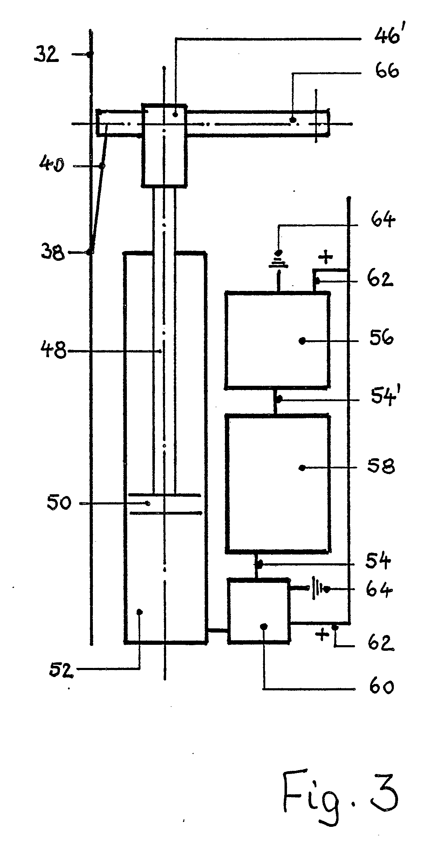

Figur 3 zeigt eine Variante der Figur 2, die darin besteht, daß das freie Ende der Kolbenstange 48 einen modifizierten Gabelkopf 46′ trägt, in dem ein Hebelarm 66 befestigt ist, der quer zur Längsachse der Kolbenstange 48 verstellbar ist. Am in Figur 3 linken Ende des Hebelarms 66 ist das Zugseil 40 befestigt. Bei dieser Variante kann durch Verstellung des Hebelarms 66 im Gabelkopf 46′ die auf das Zugseil 40 wirkende Kraft eingestellt werden, um auf diese Weise eine Anpassung der Bremskraft an die jeweilige Anhängelast erzielen zu können.

Im Ausführungsbeispiel der Figur 5 ist ein hydraulischer Arbeitszylinder 52 vorgesehen, an den über die hydraulische Druckleitung 54 mit einem Drucksicherheits- und Reduzierventil 68 eine Hydraulikpumpe 70 angeschlossen ist. Die Hydraulikpumpe 70 ist mit einem Öltank 72 verbunden.

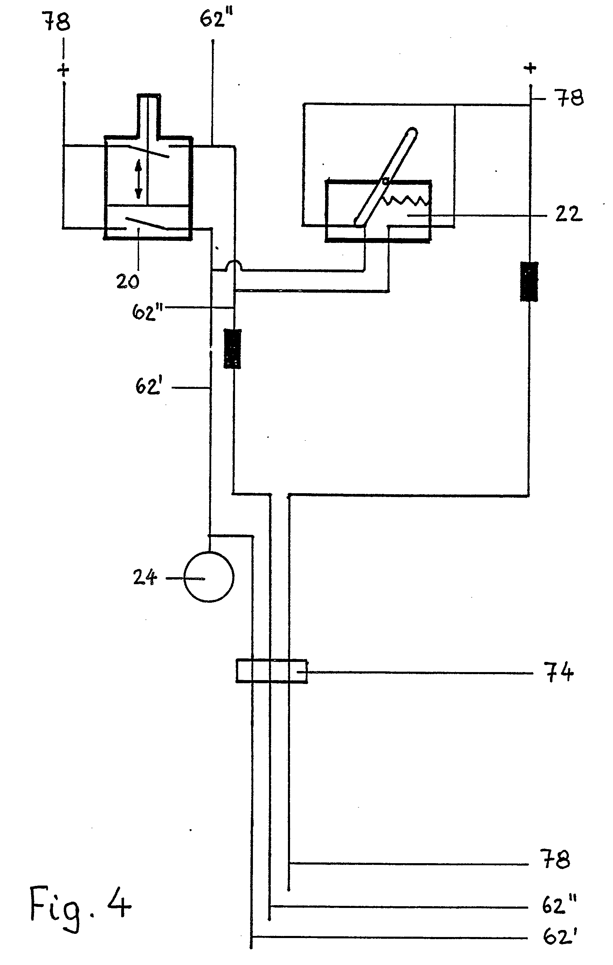

Figur 4 zeigt die an dieses Bremssystem über eine herkömmliche, elektrische Kupplung 74 angeschlossene Schaltung mit dem Bremslichtschalter 20 und dem manuell zu betätigenden Schalter 22. Daraus geht hervor, daß der Bremslichtschalter 20 zwei Schaltstellungen hat, von denen in der ersten Schaltstellung, die durch Betätigen des Fußbremshebels 18 erreicht wird, die elektrische Steuerleitung 62' mit Strom versorgt wird, so daß die schematisch angedeuteten Bremsrückleuchten 24 aufleuchten. Ober die Kupplung 74 führt diese Steuerleitung 62' gemäß Figur 5 zu einem ersten Schaltrelais 76, das in der erläuterten Schaltstellung des Bremslichtschalters 20 erregt wird und Strom aus der Anschlußleitung 78 freigibt. Dadurch wird die Hydraulikpumpe 70 über die Steuerleitung 62 in einer solchen Drehrichtung angetrieben, daß Drucköl in den Arbeitszylinder 52 fließt und dabei den Kolben 50 ausschiebt. Dadurch wird in der bereits beschriebenen Weise die Anhängerbremse betätigt.

Dieselbe Wirkung kann auch durch Betätigen des Schalters 22 erreicht werden, da dieser gemäß Figur 4 ebenfalls an die Steuerleitung 62' angeschlossen ist.

Wenn der Fußbremshebel 18 wieder freigegeben wird, kommt der Bremslichtschalter 20 in seine zweite Schaltstellung, in der der in Figur 4 obere Kontakt geschlossen wird, so daß Strom über die elektrische Steuerleitung 62" zum zweiten Relais 80 der Figur 5 fließt. Dabei wird dieses Relais 80 erregt, so daß Strom über die Steuerleitung 62a zur Hydraulikpumpe 70 fließt. Diese wird nun in der entgegengesetzten Richtung angetrieben, so daß der Kolben 50 zurückgezogen wird, um die Anhängerbremse zu lösen.

Am Ende dieser Rückzugsbewegung des Kolbens 50 betätigt ein Ausschaltorgan 82, das an der Kolbenstange 48 befestigt ist, ein Schaltorgan 84, beispielsweise einen Rollenschalter, das in die Steuerleitung 62a geschaltet ist und in der genannten Endstellung die Stromzufuhr zur Hydraulikpumpe 70 unterbricht.

Auch dieser Vorgang des Lösens der Anhängerbremse kann mit Hilfe des manuellen Schalters 22 durchgeführt werden.

Bei einer nicht dargestellten Variante der Figur 5 ist statt des Reduzierventils 63 ein Rhythmus- oder Schrittventil vorgesehen, um das Bremssystem für den Anhänger 14 schrittweise betreiben zu können. Bei dieser Variante sind das Relais 80 und das Ausschaltorgan 82 mit dem zugehörigen Schaltorgan 84 überflüssig. Über das Schrittventil kann vom Schalter 22 aus die Bremswirkung je nach Bedarf dosiert werden.

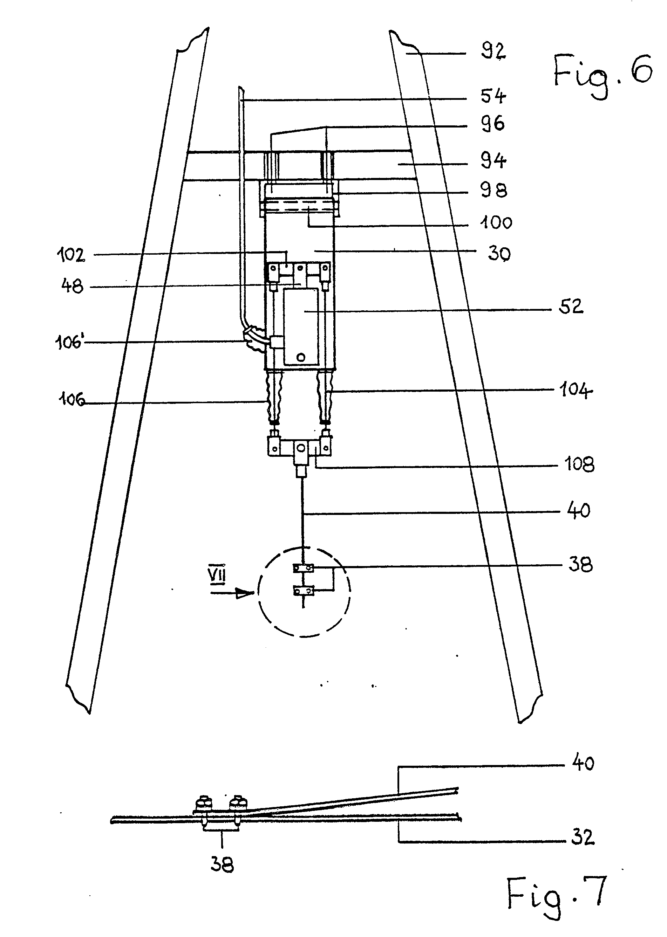

Figur 6 zeigt einen Teil eines Hauptrahmens 92 eines Anhängers. Der Hauptrahmen 92 hat im vorderen Bereich des Anhängers eine Querstrebe 94, an der über zwei Schraubverbindungen 96 ein Halteorgan 98 mit einer Schraubenführung 100 zur Befestigung des Gehäuses 30 angebracht ist. In dem Gehäuse 30 ist die Zusatz bremsvorrichtung gemäß der Erfindung untergebracht. Von dieser ist der Arbeitszylinder 52 mit der Kolbenstange 48 zu erkennen. In Abänderung der Ausführungsbeispiele der Figuren 2 und 3 ist am freien Ende der Kolbenstange 48 ein Waagbalken 102 schwenkbar angelenkt an dessen beiden freien Enden je ein Übertragungsseil 104 oder eine Übertragungsstange angelenkt ist. Die beiden Übertragungsseile 104, deren aus dem Gehäuse 30 heraustretende Abschnitte in Manschetten 106 geschützt sind, sind an einem weiteren Waagbalken 108 angelenkt, in dessen Mitte das Zugseil 40 angreift. Ähnlich wie beim Beispiel der Figur 1 ist das Zugseil 40 in den Punkten 38 mit dem Koppelelement 32 verbunden, das zum Betätigen der Einrückorgane 34 für die Radbremsen der Räder 36 des Anhängers 14 dient.

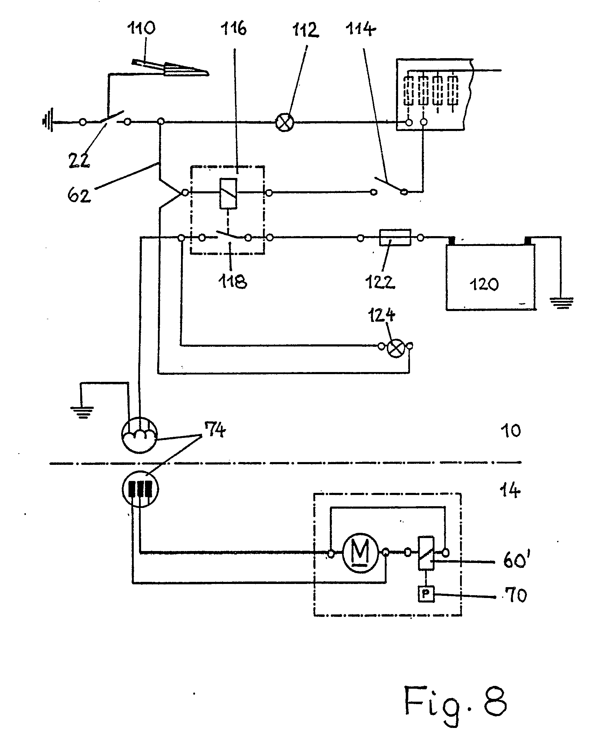

Die Wirkungsweise der Variante der Figuren 6 und 7 ist entsprechend der bereits beschriebenen Funktionen. Es sei angenommen, daß bei dieser Variante die in jedem Zugfahrzeug 10 vorhandene Feststellbremse 110 (vgl. Figur 8) kurz betätigt wird, ohne dadurch eine Bremsung der Räder 16 des Zugfahrzeugs 10 herbeizuführen. Vielmehr wird durch kurzes Anziehen der Feststellbremse 110 der Schalter 22 geschlossen, der bei herkömmlichen Fahrzeugen schon eingebaut ist, um eine Kontrolleuchte 112 an Spannung anzulegen. Wie Figur 8 zeigt, wird dadurch bei geschlossenem Hauptschalter 114 ein Relais 116 erregt, wodurch dessen Schalter 118 geschlossen wird. Auf diese Weise fließt von der Fahrzeugbatterie 120 Strom über eine Sicherung 122 einerseits über einen Summer 124 und andererseits über die elektrische Kupplung 74 zwischen dem Zugfahrzeug 10 und dem Anhänger 14 zu der am Anhänger 14 angebrachten, erfindungsgemäßen Bremsvorrichtung. In dieser betätigt ein Motor M über ein Elektromagnetventil 60' die Hydraulikpumpe 70, welche über die Druckleitung 54 an den Arbeitszylinder 52 angeschlossen ist. Gemäß Figur 6 ist an der Anschlußstelle eine weitere Schutzmanschette 106' angebracht.

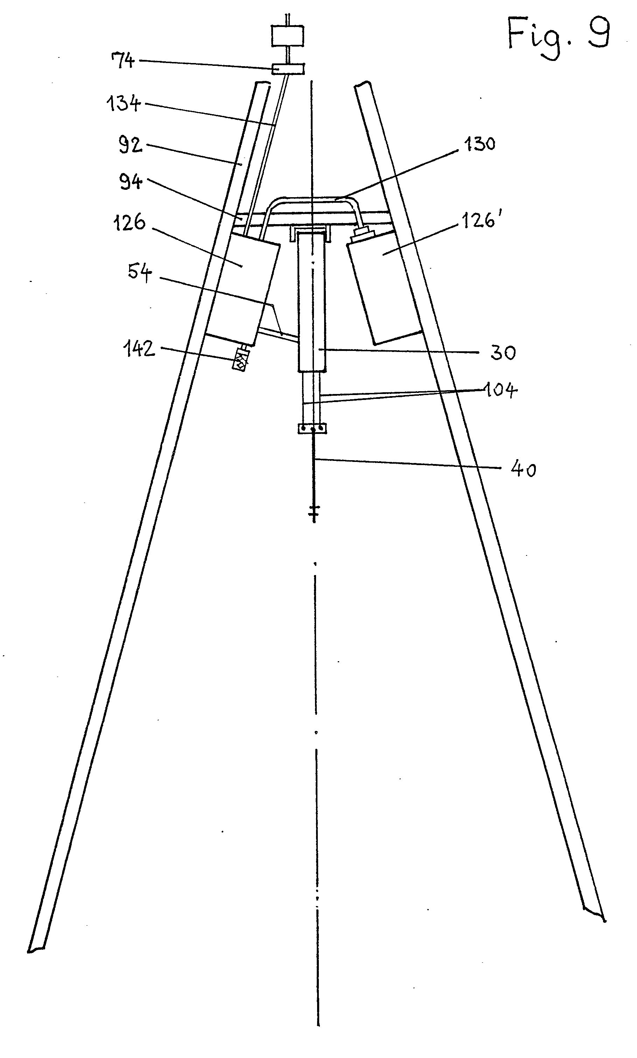

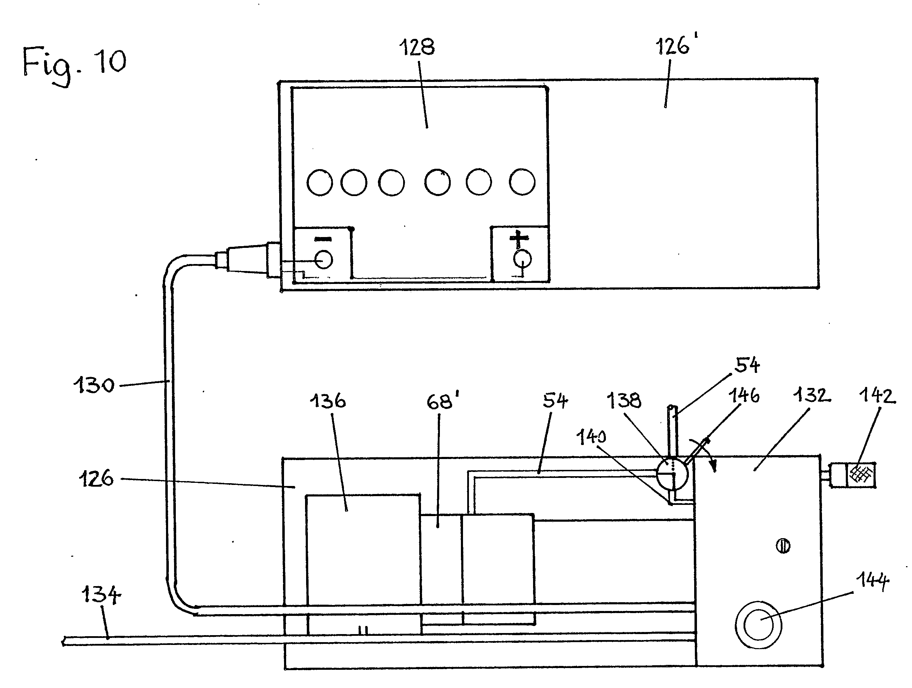

Bei der Variante der Figur 9, bei der der Hauptrahmen 92 des Anhängers 14 an seiner Querstrebe 94 ebenfalls das Gehäuse 30 mit dem Arbeitszylinder 52 trägt, sind zwei zusätzliche, kastenartige Gehäuse 126 und 126' angebracht, die in Figur 10 näher dargestellt und die alternativ auch im Kofferraum des Zugfahrzeugs 10 untergebracht sein können. Das Gehäuse 126' nimmt eine zusätzliche Batterie 128 auf, die über ein Kabel 130 mit einer elektrischen Schaltung 132 im Gehäuse 126 verbunden ist. Der Platz neben der Batterie 128 kann für die Unterbringung von Werkzeug genutzt werden. Beide Gehäuse 126 und 126' werden durch nicht gezeigte Deckel verschlossen, damit keine Feuchtigkeit eindringen kann.

Wie vor allem Figur 9 zeigt, ist die elektrische Schaltung 132 über ein Versorgungskabel 134, das die notwendigen Steuer- und Anschlußleitungen aufnimmt, und die Kupplung 74 mit dem Zugfahrzeug 10 verbunden. Das Versorgungskabel 134 ist über die lediglich als Block eingezeichnete, elektrische Schaltung gemäß der Erfindung geführt, beispielsweise über die Schaltung der Figuren 4 oder 8. Damit führen von dieser Schaltung die Steuerleitungen 62 und die Anschlußleitung 78 im Versorgungskabel 134 auch zu der Betätigungsschaltung gemäß der Erfindung, die als Block 136 dargestellt und im Gehäuse 126 untergebracht ist. Im Ausführungsbeispiel der Figur 10 enthält diese Betätigungsschaltung im Block 136 die Hydraulikpumpe 70 mit Öltank 72 ähnlich dem Ausführungsbeispiel der Figur 5. Von dieser hydraulischen Schaltung, die über die Steuerleitung 62 im Versorgungskabel 134 von dem Schalter 22 betätigt werden kann, führt die Druckleitung 54 in der beschriebenen Weise zu dem Arbeitszylinder 52, der im Gehäuse 30 angeordnet ist. Der Druck in der Leitung 54 kann durch ein Mehrwegeventil 68' auf den gewünschten Wert eingestellt werden. Wenn die Zusatzbremsen des Anhängers 14 gelöst sind, ist das elektrisch betätigte Mehrwegeventil 68' stromlos offen, so daß der Arbeitszylinder 52 durch die Federkraft der Radbremsen des Anhängers 14 selbsttätig in die Öffnungsstellung zurückfährt.

Im Bereich einer Längswand des Gehäuses 126, an der die Druckleitung 54 aus dem Gehäuse heraustritt, ist ein Umschaltventil 138 vorgesehen, von dem eine Leitung 140 über die elektrische Schaltung 132 zu einem hydraulischen Nebenanschluß 142 führt. An diesem kann beispielsweise ein hydraulischer Wagenheber, eine Kippvorrichtung für Anhänger oder eine Slipvorrichtung für Boote angeschlossen werden. Wenn das Umschaltventil 138 von Hand so eingestellt ist, daß die Druckleitung 54 mit der Leitung 140 verbunden ist, so daß der nach außen führende Teil der Druckleitung 54 abgeschaltet ist, kann durch Betätigen eines Druckknopfes 144 der elektrischen Schaltung 132 die Hydraulikpumpe 70 der Betätigungsschaltung 136 eingesetzt werden, um den Nebenanschluß 142 mit Druck zu versorgen, beispielsweise für den genannten Wagenheber oder die Kippvorrichtung des Anhängers. In dieser Stellung des Umschaltventils 138 ragt ein Handhebel 146 aus dem Gehäuse 126 heraus, so daß dessen Deckel nicht verschlossen werden kann. Erst wenn der Handhebel 146 in Pfeilrichtung geschwenkt wird, so daß das Umschaltventil 138 die Druckleitung 54 mit dem Arbeitszylinder 52 verbindet, läßt sich der Deckel des Gehäuses 126 schließen, so daß das Bremssystem gemäß der Erfindung betriebsbereit ist. Auf diese Weise wird verhindert, daß der Fahrer nach der Nutzung des Nebenanschlusses 142 eine Umschaltung vergißt.

Figur 11 zeigt eine Schnittdarstellung des vorderen Teils einer Deichsel 12 mit Auflaufbremseinrichtung 28, in die die Bremsvorrichtung gemäß der Erfindung eingebaut ist. Beim Auflaufen des Anhängers 14 wird in bekannter Weise der Schubkolben 86 der Auflaufbremseinrichtung 28 in das Trägerrohr 88 eingeschoben. Das Ende des Schubkolbens 86 schwenkt dabei einen Hebel 40', der das Koppelelement 32 - das Anhängerbremsseil - anzieht und damit das Einrückorgan 34 der Anhängerbremsen betätigt.

In diese Auflaufbremseinrichtung 28 ist die zusätzliche Bremsvorrichtung gemäß der Erfindung eingebaut. Hierzu ist im auf den Hebel 40' wirkenden Ende des Schubkolbens 86 ein weiterer Schub- und Führungskolben 46' eingebaut, der dem o.a. Gabelkopf 46 am Ende der Kolbenstange 48 entspricht. Die Kolbenstange 48 ist am Kolben 50 befestigt, welcher im Arbeitszylinder 52 verschiebbar gelagert ist. An diesen Arbeitszylinder 52 ist die Druckleitung 54 angeschlossen. Sobald diese Druckleitung 54 beim Betätigen des Fußbremshebels 18 oder des Schalters 22 freigegeben wird, wird der Kolben 50 beaufschlagt, so daß seine Kolbenstange 48 mit dem Schub- und Führungskolben 46' ausgeschoben wird, wodurch der Hebel 40', der mit einem Stoßdämpfer 90 verbunden ist, das Koppelelement 32 der Anhängerbremse betätigt.

## Ansprüche

1. Vorrichtung zum Abbremsen eines Radbremsen aufweisenden Anhängers, der über eine Deichsel an einem Zugfahrzeug angehängt ist, das eine auf seine Räder wirkende Fußbremseinrichtung, eine Feststellbremseinrichtung sowie einen elektrischen Stromkreis hat, dadurch **gekennzeichnet,** daß von dem elektrischen Stromkreis eine von mindestens einem Schalter (20, 22) betätigbare Steuerleitung (62) abgezweigt ist, die bei geschlossenem Schalter (20, 22) ein Betätigungsglied (60) zum Einrücken der Radbremsen des Anhängers (14) aktiviert.

2. Vorrichtung nach Anspruch 1, dadurch gekennzeichnet, daß der Schalter ein manuell betätigbarer Schalter (22) ist.

3. Vorrichtung nach Anspruch 2, dadurch gekennzeichnet, daß der Schalter (22) über die Feststellbremseinrichtung (110) betätigbar ist.

4. Vorrichtung nach Anspruch 1, dadurch gekennzeichnet, daß der Schalter ein Bremslicht-Schalter (20) der Fußbremseinrichtung (18) ist.

5. Vorrichtung nach einem der Ansprüche 1 bis 4, dadurch gekennzeichnet, daß der elektrische Stromkreis über die Bremsrückleuchten (24) des Zugfahrzeugs (10) geführt ist.

6. Vorrichtung nach einem der vorhergehenden Ansprüche, dadurch gekennzeichnet, daß das Betätigungsglied (60) ein Druckfreigabeglied ist, das in eine Druckleitung (54) zwischen einen Druckerzeuger (56. 70) und einen Arbeitszylinder (52) geschaltet ist, dessen Kolbenstange (48) mit einem Koppelelement (32) verbunden ist, das seinerseits mit einem Einrückorgan (34) für die Radbremsen verbunden ist.

7. Vorrichtung nach Anspruch 6, dadurch gekennzeichnet, daß das freie Ende der Kolbenstange (48) über ein Zugseil (40) mit dem Koppelelement (32) verbunden ist.

8. Vorrichtung nach Anspruch 7, dadurch gekennzeichnet, daß das freie Ende der Kolbenstange (48) einen quer zu ihrer Längsachse verstellbaren Hebelarm (66) trägt, an dessen freiem Ende das Zugseil (40) befestigt ist.

9. Vorrichtung nach Anspruch 7, dadurch gekennzeichnet, daß das freie Ende der Kolbenstange (48) über eine zwei Waagbalken (102,108) und zwei Übertragungsseile (104) aufweisende Parallelogrammführung am Zugseil (40) angelenkt ist.

10. Vorrichtung nach einem der Ansprüche 6 bis 9, dadurch gekennzeichnet, daß das Druckfreigabeglied ein Elektromagnetventil (60) und daß die Druckleitung (54) eine pneumatische Druckleitung ist.

11. Vorrichtung nach einem der Ansprüche 6 bis 9, dadurch gekennzeichnet, daß das Druckfreigabeglied an eine Hydraulikpumpe (70) angeschlossen ist und daß die Druckleitung (54) eine hydraulische Druckleitung ist.

12. Vorrichtung nach Anspruch 11, dadurch gekennzeichnet, daß in die hydraulische Druckleitung (54) zwischen der Hydraulikpumpe (70) und dem Arbeitszylinder (52) ein Schrittventil geschaltet ist.

13. Vorrichtung nach Anspruch 11, dadurch gekennzeichnet, daß die Hydraulikpumpe (70) über ein Relais (116) antreibbar ist, das von dem mit der Handbremseinrichtung (110) verbundenen Schalter (22) ansteuerbar ist.

14. Vorrichtung nach Anspruch 11. dadurch gekennzeichnet, daß die Hydraulikpumpe (70) über zwei Relais (76, 80) in beiden Drehrichtungen antreibbar ist, wobei die beiden Relais alternativ in Abhängigkeit von der Stellung des Schalters (20, 22) ansteuerbar sind.

15. Vorrichtung nach Anspruch 14, dadurch gekennzeichnet, daß das Relais (80) für die der Rückzugsbewegung der Kolbenstange (48) entsprechende Drehrichtung der Hydraulikpumpe (70) über ein Schaltorgan (84) antreibbar ist, das von einem an der Kolbenstange angebrachten Ausschaltorgan (82) im Bereich des unteren Totpunktes der Kolbenbewegung schaltbar ist.

16. Vorrichtung nach einem der Ansprüche 6 bis 15, dadurch gekennzeichnet, daß das Koppelelement (32) Teil einer Auflaufbremseinrichtung (28) ist.

17. Vorrichtung nach einem der Ansprüche 6 bis 16, dadurch gekennzeichnet, daß von der Druckleitung (54) zwischen dem Druckerzeuger (54,70) und dem Arbeitszylinder (52) über ein Umschaltventil (138) eine Leitung (140) abzweigt, die zu einem Nebenanschluß (142) für den hydraulischen oder pneumatischen Antrieb von Hilfsaggregaten führt.

18. Vorrichtung nach Anspruch 17, dadurch gekennzeichnet, daß das Umschaltventil (138) einen Betätigungshebel (146) hat, der in der abgeschalteten Stellung für den Arbeitszylinder (52) aus einem Gehäuse (126) herausragt.

Fig. 1

Fig.2

Fig. 3

Fig. 4

Fig. 5

Fig.6

Fig.7

Fig. 8

Fig. 9

Fig. 10

EP 0 319 970 A2

Fig. 11